# EUROPEAN PATENT SPECIFICATION

(11) **EP 3 174 447 B1**
(45) Date of publication and mention of the grant of the patent: **11.01.2023**
(21) Application number: 15753239.1
(22) Date of filing: 27.07.2015
(51) Int. Cl.: A47L 15/42, A47L 15/00, A47L 15/24

(54) **ADJUSTABLE RINSING DEVICE AND DISHWASHING MACHINE HAVING SUCH A DEVICE**
EINSTELLBARE SPÜLVORRICHTUNG SOWIE GESCHIRRSPÜLMASCHINE MIT SOLCH EINER VORRICHTUNG
DISPOSITIF DE RINÇAGE RÉGLABLE ET MACHINE À LAVER LA VAISSELLE COMPORTANT UN TEL DISPOSITIF

(30) Priority: 31.07.2014 IT TO20140612
(43) Date of publication of application: 07.06.2017
(73) Proprietor: Illinois Tool Works Inc., Glenview, IL 60025 (US)
(72) Inventor: CHERICONI, Alessio, I-55010 Altopascio (LU) (IT); ORLANDI, Riccardo, I-55010 Altopascio (LU) (IT); FABBRI, Riccardo, I-55010 Altopascio (LU) (IT)
(74) Representative: Trinks, Ole
(86) International application number: PCT/US2015/042177
(87) International publication number: WO 2016/018780

(56) References cited:
- EP-A2- 1 132 038
- DE-A1- 2 618 825
- DE-C1- 19 608 036
- US-A1- 2004 103 926

## Description

### Technical Field

The present invention relates to an adjustable rinsing device of limited cost and dimensions which offers a considerable saving in terms of energy and rinsing water in the usual washing cycles. The invention also relates to a dishwashing machine including such a device.

### Background

Dishwashing machines, particularly those for professional use (in communities, hotels, restaurants, etc.) are often used to wash separately different types of tableware, such as plates, glasses, and so on. This is especially true in "tunnel" dishwashers, where each type of tableware is loaded on baskets that are conveyed in sequence by a conveyor belt along a tunnel formed by the housing of the dishwashing machine, which is divided lengthwise into specialized stations, for example, pre-washing, washing, pre-rinsing, rinsing, drying. Therefore, baskets loaded with different types of tableware, which require different amounts of water to obtain an optimal result, arrive at the various stations in succession.

The amount of water to be supplied, in particular in the rinsing area or station, also varies as a function of the speed of advance of the conveyor belt, which also depends on the amount of dirt to be removed, in other words on how dirty the tableware is; if the speed is lower, for example, less water is required to obtain optimal rinsing than when the speed of advance of the tableware is greater.

However, known dishwashing machines always use the same amount of water, in particular for rinsing, and this leads to a waste of water with consequent higher costs. Since, then, the rinsing water is heated to high temperatures (60-80°C), an excessive consumption of water also results in higher energy consumption, with further higher costs.

These problems are solved according to FR2877828 by arranging in the rinsing area or station an additional arm, i.e. in addition to the two arms (one upper and one lower) normally present, which can be activated or deactivated by means of a special valve depending on the speed of advance of the conveyor belt in a tunnel dishwashing machine: when the belt speed is high, the additional arm is activated by opening the valve, so as to deliver a greater amount of rinsing water.

However, this solution is not satisfactory, since it increases the overall dimensions of the dishwashing machine, increases the production cost of the dishwashing machine and the complexity of the hydraulic supply circuit.

Furthermore, another problem encountered in the dishwashing machines described above is that the optimum distribution of rinsing water varies according to the type of tableware being washed: glasses, for example, require a greater quantity of water to be supplied from beneath (i.e. supplied to the lower rinsing arm), at a lower temperature (e.g. 65°C), while plates require a greater quantity of water to be supplied from above (i.e. supplied to the upper rinsing arm), at a higher temperature (e.g. 80°C). FR2877828 can only solve this problem at the expense of further complication of the hydraulic circuit and a further increase in the overall dimensions, often unacceptable. DE19608036 C1 discloses a further industrial dishwashing machine wherein the quantity of rinsing liquid is varied depending on the transport rate of the machine.

The aim of the invention is to provide an adjustable rinsing device that does not have the drawbacks described and is, in particular, easy and inexpensive to produce, highly efficient and reliable, as well as compact. A further aim of the invention is to provide a dishwashing machine, in particular of the professional, static or tunnel type, in which it is possible to adjust, in a simple, effective manner, the quantity of water supplied by the washing arms and, above all, rinsing water, without having to adjust the pump that supplies the arms and/or the pressure or flow rate of the tap water supplied.

### Summary

The invention therefore provides an adjustable rinsing device. Also provided is a dishwashing machine, in particular of the professional, static or tunnel type.

In particular, the rinsing device of the invention comprises at least one first - for example upper - rinsing arm, at least one second - for example lower - rinsing arm, and means for supplying water to the rinsing arms including a hydraulic circuit which supplies tap water hydraulically in parallel to at least the first rinsing arm and to at least the second rinsing arm. The hydraulic circuit comprises, for at least one of the first and second rinsing arms at least one first branch and one second branch arranged in parallel with each other between a tap water inlet in the hydraulic circuit and at least the first and second rinsing arms; the second branch includes flow choking means hydraulically in series therewith; and there are also means for deviating selectively the tap water towards either the first branch or the second branch.

It is thus possible to control the flow of rinsing liquid supplied to both rinsing arms or to a single rinsing arm (for example, in static or "hood" dishwashing machines) without substantially increasing the overall dimensions of the rinsing device and without the need to introduce additional arms. In essence, the water consumption of the rinsing device can be adjusted according to the productivity of the dishwashing machine, particularly in the case of tunnel type dishwashing machines that can operate with different speeds of advance of the tableware, and/or according to the type of tableware to be washed, without changing the flow rate generated by the rinsing pump or drawn directly from the mains.

Furthermore, by including, as appropriate, two separate boilers in the hydraulic circuit it is also possible to control the temperature of the rinsing water supplied to each arm.

### Brief Description of the Drawings

Further aims and advantages of the invention will become clear from the following description of some non-limiting embodiments thereof, provided purely by way of example and with reference to the figures of the accompanying drawings, in which:
figure 1 schematically shows the end part of a tunnel dishwashing machine according to the invention;
figure 2 shows a hydraulic diagram of a rinsing device according to the prior art, in the two versions, with tap water supplied directly and indirectly, with a pump; and
figures 3 to 8 show hydraulic diagrams of various embodiments of an adjustable rinsing device for the dishwashing machine of figure 1 according to the invention, with tap water supplied both directly and indirectly, with a pump.

### Detailed Description

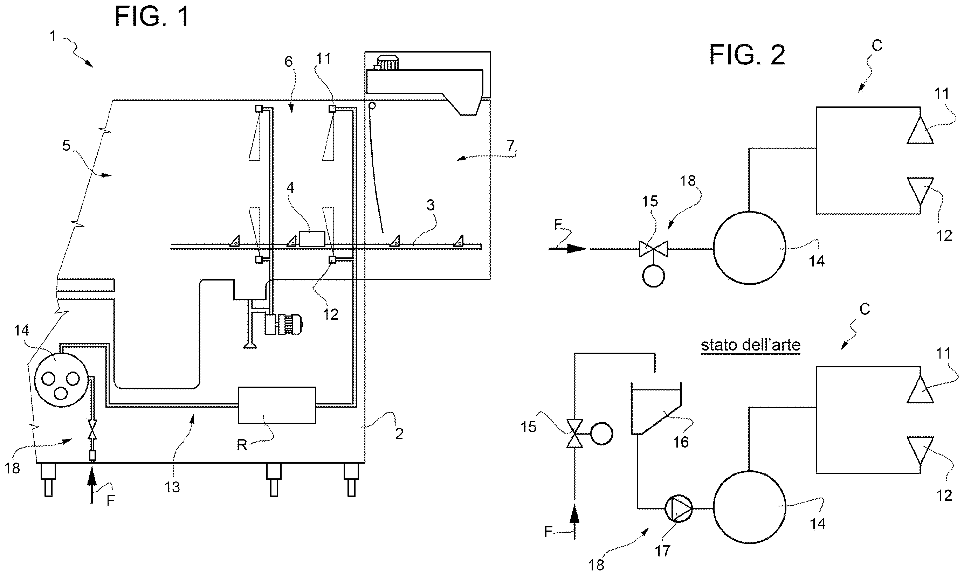

With reference to figure 1, reference numeral 1 generally indicates a tunnel-type professional dishwashing machine comprising a housing or casing 2 through which a conveyor belt 3 runs, said belt carrying baskets 4 loaded with tableware (plates, glasses, etc.), which has not been shown for the sake of simplicity. Inside the housing 2, the dishwashing machine 1 has a plurality of specialized stations through which the tableware loaded in the baskets 4 passes when the machine is in operation, said baskets advancing along the conveyor belt 3; figure 1 shows only the end part of the dishwashing machine 1, comprising a pre-rinsing station 5, a rinsing station 6 and a drying station 7, all known per se.

The rinsing station 6 has a rinsing device 10 comprising at least one first - for example upper - rinsing arm 11, at least one second - for example lower - rinsing arm 12, and means for supplying water to the rinsing arms 11, 12 including a hydraulic circuit 13 which supplies tap water (indicated by the arrow "F") hydraulically in parallel to the rinsing arms 11, 12 and which includes at least one boiler 14 for heating the tap water to a desired temperature (for example 65°C or 80°C, depending on the type of tableware to be rinsed, glasses or plates, respectively).

With reference to figure 2, which schematically shows two types of rinsing device known in the prior art, the tap water, as shown by the arrow, may be supplied to the boiler 14 directly, through a simple valve 15 (figure 2a), or indirectly, via an "air break" (figure 2b) in which the tap water, downstream of the valve 15, is supplied in free fall (i.e. without pressure) to a tank 16, from which the water is drawn, at the desired flow rate, by means of a rinsing pump 17.

In both cases, the "air break" made up of the tank 16 and the pump 17 (figure 2b), or the valve 15 (figure 2a), constitute an inlet 18 for tap water into the rinsing circuit C of figure 2, or into the hydraulic circuit 13 of the dishwashing machine 1 of figure 1.

According to the invention, the rinsing device 10 differs from the prior art rinsing devices shown in figure 2 in that, unlike in the latter, it is possible in the device 10 to adjust the flow rate of rinsing water sprayed by the arms 11 and 12, for example according to the type of tableware to be rinsed or according to the speed of advance of the baskets 4, without varying the flow rate of the water into the inlet 18, supplied by the pump 17 (when present) or directly from the mains through the valve 15.

For this purpose, the hydraulic circuit 13, unlike the prior art circuit C, has an adjustment section R, schematically shown as a block in figure 1.

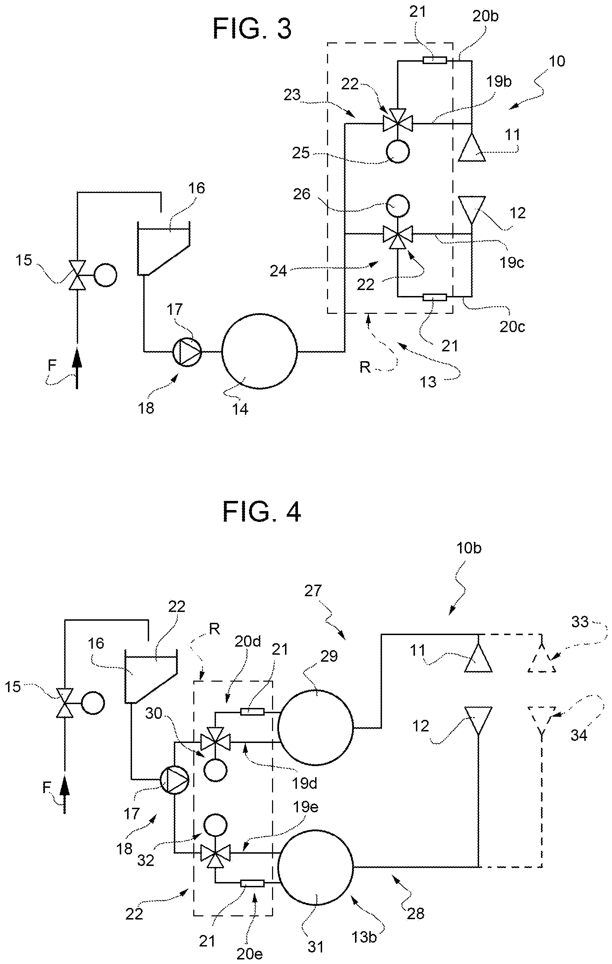

With reference also to figure 3, the hydraulic circuit 13 of the device 10 according to the invention comprises, for at least one of the rinsing arms 11, 12: at least one first branch 19 and one second branch 20 arranged hydraulically in parallel with each other between the tap water inlet 18 in the hydraulic circuit 13 and one or both rinsing arms 11, 12; flow choking means 21 (aka a flow limiter or restrictor) arranged hydraulically in series with at least the second branch 20; and means 22 for deviating selectively the tap water towards either the first branch 19 or the second branch 20. The two branches 19, 20, the flow choking means 21 and the deviator means 22 all make up the adjustment section R of the hydraulic circuit 13, as shown schematically in broken lines in figure 3.

The hydraulic circuit 13 of figure 3 further comprises a single boiler 14 for heating the tap water to a predefined temperature before supplying the tap water to the rinsing arms 11, 12 through the adjustment section R, said boiler being positioned, in the non-limiting exemplary embodiment of figure 3, upstream of the adjustment section R.

Herein and below, the terms "upstream" and "downstream" are used with reference to the direction of flow of the tap water used as rinsing liquid, indicated by the arrow F in the appended figures.

In the embodiment of the rinsing device 10 shown in figure 3, the hydraulic circuit 13 comprises hydraulically in sequence, downstream of the tap water inlet 18, a single boiler 14 and, successively, i.e. downstream of the boiler 14 with respect to the direction of flow F, a first hydraulic circuit section 23 and a second hydraulic circuit section 24 arranged hydraulically in parallel with each other immediately downstream of the boiler 14; the first section 23 connecting hydraulically the first arm 11 to the boiler 14 via a first three-way deviator valve 25 and the second section 24 connecting hydraulically the second arm 12 to the boiler 14 via a second three-way deviator valve 26.

Each section 23 and 24 of the hydraulic circuit 13 is in turn subdivided into two branches 19, 20 arranged parallel to each other; in particular, the section 23 comprises a first branch 19b and a second branch 20b arranged parallel to each other and connected hydraulically in series, on one side, to the first arm 11 and, on the opposite side, to the first three-way valve 25.

Conversely, the section 24 comprises a first branch 19c and a second branch 20c arranged parallel to each other and connected hydraulically in series, on one side, to the second arm 12 and, on the opposite side, to the second three-way valve 26.

In this way, the flow rate of rinsing water supplied in the rinsing station 6 by the arms 11, 12 of the device 10 can selectively assume four different values, depending on whether the tap water flow F is directed through one or other of the branches 19b, 20b of the section 23 and/or through one or other of the branches 19c, 20c of the section 24 of the hydraulic circuit 13.

The flow choking means 21 are known in the prior art and are therefore not described here in detail. They may consist of simple calibrated restrictions, diaphragms, by-passes or any other suitable means for controlling the passage of a flow through the corresponding branch 20b, c, which flow is predetermined and less than the flow passing, for an equal pressure drop, through the branch 19b, c, including the use of an additional rinsing pump arranged in series along the branch 20b, c.

The multi-way valves 25 and 26 also make it possible to deviate, in a simple and direct manner, the flow F toward one or other of the branches 19b, c and 20b, c of each section 23, 24, thus constituting the deviator means 22.

With reference now to figure 4, this shows a possible variant 10b of the adjustable rinsing device 10 according to the invention. Details which are similar or identical to those previously described are indicated with the same reference numerals, for the sake of simplicity.

In this embodiment, the hydraulic circuit 13 that serves the two arms 11 and 12 for supplying the rinsing liquid is replaced by a hydraulic circuit 13b which comprises a first circuit section 27 and a second circuit section 28 arranged hydraulically in parallel with each other downstream of the tap water inlet 18; the first hydraulic circuit section 27 connects hydraulically the first arm 11 to the tap water inlet 18 and the second hydraulic circuit section 28 connects hydraulically the second arm 12 to the tap water inlet 18.

Each section 27 and 28 of the hydraulic circuit 13b is in turn subdivided into two branches 19, 20 arranged parallel to each other; in particular, the first hydraulic circuit section 27 of the hydraulic circuit 13b comprises a first branch 19d and a second branch 20d arranged parallel to each other, a first boiler 29 connected hydraulically in series with the first arm 11 downstream of the first and second branch 19d and 20d of the section 27 and connected hydraulically in series with both the first and second branch 19d, 20d, and a first three-way deviator valve 30 arranged upstream of the first and second branch 19d, 20d so as to connect selectively the first and second branch 19d, 20d of the first hydraulic circuit section 27 to the tap water inlet 18. The branch 20d has a flow choking means 21 arranged hydraulically in series along said branch.

Similarly, the second hydraulic circuit section 28 of the hydraulic circuit 13b comprises a first branch 19e and a second branch 20e arranged parallel to each other, a second boiler 31 connected hydraulically in series with the second arm 12 downstream of the first and second branch 19e and 20e of the section 28 and connected hydraulically in series with both the first and second branch 19e, 20e, and a second three-way deviator valve 32 arranged upstream of the first and second branch 19e, 20e so as to connect selectively the first and second branch 19e, 20e of the second hydraulic circuit section 28 to the tap water inlet 18. The branch 20e has a flow choking means 21 arranged hydraulically in series along said branch.

In this way, the valves 30 and 32, unlike the valves 25, 26, work at low temperature (ambient temperature or tepid water), being arranged upstream of the boilers 29 and 31 and can therefore be produced at a lower cost and in any case are more reliable in operation. Furthermore, as there are two separate boilers 29, 31 for each circuit section, the two arms 11 and 12 may be supplied, if needed, with rinsing water heated to different temperatures.

If necessary, the hydraulic circuit 13b according to the invention may also comprises a third rinsing arm 33 (shown in broken lines) connected by means of the hydraulic circuit 13b (by means of an optional part of the section 27 shown in broken lines) hydraulically in series with the first rinsing arm 11, downstream of said arm 11; and a fourth rinsing arm 34 (shown in broken lines) connected by means of the hydraulic circuit 13b (by means of an optional part of the section 28 shown in broken lines) hydraulically in series with the second rinsing arm 12, downstream of said arm 12.

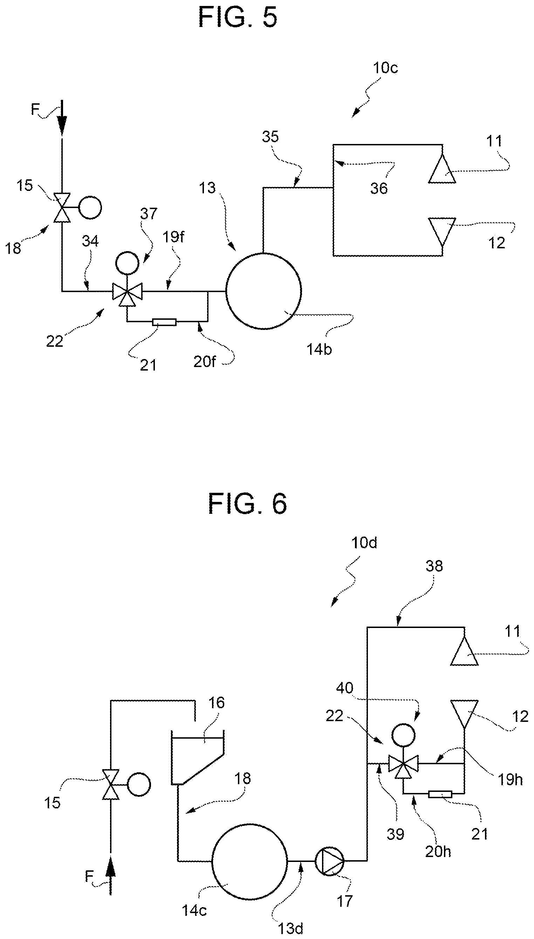

With reference now to figures 5 and 6, these show two further possible variants 10c, 10d of the adjustable rinsing device 10 according to the invention. Details which are similar or identical to those previously described are indicated with the same reference numerals, for the sake of simplicity.

According to the variant 10c of figure 5, the device of the invention comprises, in addition to the arms 11, 12, a hydraulic circuit 13c which in turn comprises a first hydraulic circuit section 34 arranged immediately downstream of the tap water inlet 18 and a second hydraulic circuit section 35 arranged hydraulically in series with, and downstream of, the first section 34 and downstream of a boiler 14b arranged hydraulically in series between the first section 34 and the second section 35.

While the second section 35 supplies directly the first branch 11 and the second branch 12, in parallel, by means of a bifurcation 36, the first section 34 is provided with a first branch 19f and a second branch 20f arranged hydraulically in parallel with each other and connected to the tap water inlet 18 by means of a three-way deviator valve 37 which constitutes the deviator means 22; the branch 20f is further provided in series with the flow choking means 21.

The device 10c represents a simpler and more economical variant of the device 10b previously described and retains the advantages thereof, although the arms 11, 12 are in this case supplied with water at the same temperature.

According to the variant 10d of figure 6, the device of the invention comprises, in addition to the arms 11, 12, a hydraulic circuit 13d which in turn comprises a first hydraulic circuit section 38 and a second hydraulic circuit section 39 arranged both immediately downstream of a boiler 14c connected hydraulically in series with both the first and second section 38 and 39 and arranged downstream of the tap water inlet 18; in particular, in this variant the tap water inlet 18 is located immediately downstream of the tank 16 with the corresponding "air break", while the pump 17 is arranged downstream of the boiler 13c and upstream of the two hydraulic circuit sections 38 and 39, always with reference to the direction of the flow of water F.

The first section 38 supplies directly and exclusively the first arm 11, while the second section 39 supplies exclusively the second arm 12 and comprises a first branch 19h and a second branch 20h which are connected to the boiler 14c by means of a three-way deviator valve 40 on one side and directly in series with the second arm 12 on the opposite side. The branch 20h is provided hydraulically in series with flow choking means 21, while the valve 40 constitutes the deviator means 22 to direct the flow F of water either toward the branch 19h or toward the branch 20h.

This variant 10d of the device of the invention is particularly suitable for a dishwashing machine different to that of figure 1, such as a static or "hood" dishwashing machine rather than a tunnel dishwashing machine.

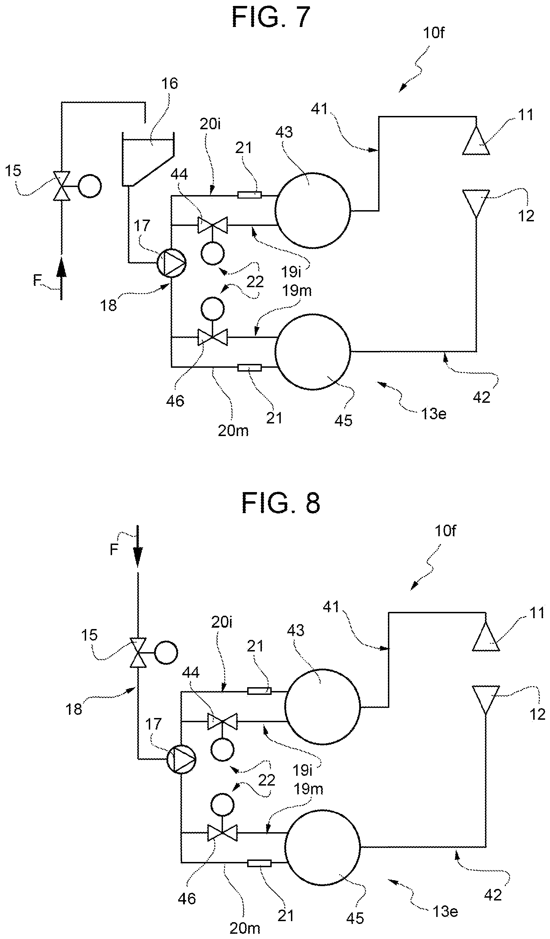

Lastly, with reference to figures 7 and 8, these show the same variant 10f of the rinsing device of the invention, the only difference between figures 7 and 8 consisting of the fact that, in the case of figure 8, the tap water inlet 18 is direct, through a valve 15, while in the case of figure 7 the tap water inlet 18 is indirect, being arranged downstream of the "air break", which is in turn arranged downstream of a gate valve 15, and is made up of the tank 16 and the pump 17.

Details which are similar or identical to those previously described are indicated with the same reference numerals, for the sake of simplicity. Furthermore, details which are identical in figures 7 and 8 are indicated with the same reference numerals, the description that follows being applicable to both figures 7 and 8, as they both show the same device.

The rinsing device 10f of figures 7 and 8 comprises, in addition to the arms 11, 12, a hydraulic circuit 13e which in turn comprises a first hydraulic circuit section 41 and a second hydraulic circuit section 42 arranged hydraulically in parallel with each other downstream of the tap water inlet 18, which connect hydraulically the arms 11, 12 to the tap water inlet 18; in particular, the first section 41 connects hydraulically the first arm 11 to the tap water inlet 18 and the second section 42 connects hydraulically the second arm 12 to the tap water inlet 18.

The first hydraulic circuit section 41 comprises a first branch 19i and a second branch 20i arranged parallel to each other, and a first boiler 43 connected hydraulically in series with the first arm 11 downstream of the first and second branch 19i, 20i, and further connected hydraulically in series with both said branches 19i, 20i. The hydraulic circuit section 41 further comprises a flow choking means 21 arranged hydraulically in series along the branch 20i and a first on-off valve 44, for example a gate valve, arranged hydraulically in series along the first branch 19i of the section 41.

Similarly, the second hydraulic circuit section 42 comprises a first branch 19m and a second branch 20m arranged parallel to each other, and a second boiler 45 connected hydraulically in series with the second arm 12 downstream of the first and second branch 19m, 20m, and further connected hydraulically in series with both said branches 19m, 20m. The hydraulic circuit section 42 further comprises a flow choking means 21 arranged hydraulically in series along the branch 20m and a second on-off valve 46, for example a gate valve, arranged hydraulically in series along the first branch 19m of the section 42.

In this variant, the on-off valves 44 and 46 constitute the deviator means 22, replacing the three-way valves previously described. In this case, when the valves 44, 46 are open, the flow F of rinsing water all passes through the branches 19i, 19m, since the pressure drop along the branches 20i, 20m provided with the flow choking means 21 is greater. When, conversely, the valves 44, 46 are closed, the branches 19i, 19m are cut off from the tap water inlet 18 and all the flow F is directed through the branches 20i, 20m having the flow choking means 21, such that a reduced flow of rinsing water is supplied to the arms 11, 12, thereby offering substantial savings when the dishwashing machine 1 is working with the belt 3 advancing at low speed. Also according to this variant, therefore, the arms 11 and 12 may be supplied with water at different temperatures, thanks to the presence of two separate boilers 43, 45.

It is clear from what is described above that further variants may be provided to meet more complex requirements. For example, the hydraulic circuit section 13 intended to implement the adjustment section R may have more than two branches in parallel, for example three or more, the three-way valves described being replaced with multi-way valves, in order to deviate the flow F of tap water to a plurality n of hydraulic circuit branches connected in parallel; by equipping (n - 1) branches of this circuit with flow choking means 21 for determining different flow rates, n different flow rates of rinsing water may be supplied to the arms 11, 12 without, for example, adjusting the pump 17.

Ultimately, it is clear from what is described above that, according to the invention, at least the first and second branches 19, 20 of the different variants of the hydraulic circuit 13 and the means 22 for selectively deviating the tap water towards either the first branch 19 or the second branch 20, may be arranged hydraulically upstream or downstream of the at least one boiler 14, so as to connect at least one or both of the rinsing arms 11, 12 to the tap water inlet 18 through the at least one boiler 14.

Moreover, the means 22 for selectively deviating the tap water towards either the first branch or the second branch, may consist indiscriminately of a multi-way deviator valve arranged hydraulically upstream of the first and second branch 19, 20 or an on-off valve arranged hydraulically in series on the first branch 19, or on the hydraulic circuit branch which does not have flow choking means.

It is thus possible to vary, in a simple way and at an equal head generated by the pump 17 (when present), the flow rate of rinsing water sprayed by the arms 11, 12 between two or more values, and also to vary the temperature of said water, all without increasing the overall dimensions of the rinsing device, since the different flow rates are always generated using only two arms, which are already normally present in all dishwashing machines of the type described.

All the aims of the invention are therefore achieved.

## Claims

1. An adjustable rinsing device (10) for a dishwashing machine (1), in particular of the professional, static or tunnel type, comprising at least one first - for example upper - rinsing arm (11), at least one second - for example lower - rinsing arm (12), and means for supplying water to the rinsing arms including a hydraulic circuit (13) which supplies tap water hydraulically in parallel to at least the first rinsing arm and to at least the second rinsing arm, **characterized in that**, in combination:
i)- the hydraulic circuit (13) comprises a first and a second section (23,24;27,28;38,39;41,42), at least one thereof is connected with at least one of the first and second rinsing arms (11, 12);
ii)- at least one of the first and second sections comprising iii)- a first branch (19) and at least one second branch (20) arranged hydraulically in parallel with each other between a tap water inlet (18) in the hydraulic circuit (13) and at least the first and second rinsing arms (11, 12), at least the second branch (20) including flow choking means (21) hydraulically in series therewith; and
iv)- means (22) for deviating selectively the tap water towards either the first branch (19) or the second branch (20).

2. The device as claimed in claim 1, **characterized in that** the hydraulic circuit (13) comprises at least one boiler (14) for heating the tap water to a predefined temperature before supplying the tap water to the rinsing arms (11,12); said first and second branches (19,20) and said means (22) for deviating selectively the tap water towards either the first branch or the second branch being arranged hydraulically upstream or downstream of the at least one boiler ( 14) so as to connect at least one of said at least one first and second rinsing arms (11, 12) to the tap water inlet ( 18) via the at least one boiler ( 14).

3. The device as claimed in claim 1 or 2, **characterized in that** the means (22) for deviating selectively the tap water towards either the first branch or the second branch consist of a multi-way deviator valve (25;26;30;32;37) arranged hydraulically upstream of the first and second branches (19,20).

4. The device as claimed in claim 1 or 2, **characterized in that** the means (22) for selectively deviating the tap water towards either the first branch or the second branch consist of an on-off valve (44;46) arranged hydraulically in series along the first branch (19).

5. The device as claimed in any one of the preceding claims, further comprising a third rinsing arm (33) connected by means of said hydraulic circuit (13) hydraulically in series with the first rinsing arm (11) downstream of the first arm; and a fourth rinsing arm (34) connected by means of said hydraulic circuit (13) hydraulically in series with the second rinsing arm (12) downstream of the second arm.

6. The device (10) as claimed in any one of claims 1 to 3, wherein the hydraulic circuit (13) comprises hydraulically in sequence downstream of the tap water inlet (18): a boiler (14) and a first circuit section (23) and a second circuit section (24) arranged hydraulically in parallel with each other immediately downstream of the boiler (14), the first section (23) connecting hydraulically the first arm (11) to the boiler (14) via a first three-way deviator valve (25) and the second section (24) connecting hydraulically the second arm (12) to the boiler (14) via a second three-way deviator valve (26); **characterized in that** the first and second sections (23,24) each comprise a said first branch (19b,19c) and a said second branch (20b;20c) arranged in parallel to each other; the first and second branches (19b,20b) of the first section (23) being connected hydraulically in series, on one side, to the first arm (11) and, on the opposite side, to the first three-way valve (25); and the first and second branches ( 19c,20c) of the second section (24) being connected hydraulically in series, on one side, to the second arm (12) and, on the opposite side, to the second three-way valve (26).

7. The device (10b) as claimed in any one of claims 1 to 3, wherein the hydraulic circuit (13b) comprises: a first hydraulic circuit section (27) and a second hydraulic circuit (28) arranged hydraulically in parallel with each other downstream of the tap water inlet (18), the first section (27) connecting hydraulically the first arm (11) to the tap water inlet and the second section (28) connecting hydraulically the second arm (12) to the tap water inlet; **characterized in that**: the first section (27) comprises a said first branch (19d) and a said second branch (20d) arranged hydraulically in parallel with each other, a first boiler (29) connected hydraulically in series with the first arm (11) downstream of the first and second branches (19d,20d) and connected hydraulically in series with both the first and second branches (19d,20d), and a first three-way deviator valve (30) arranged upstream of the first and second branches (19d,20d) so as to connect selectively the first and second branches of the first section (27) to the tap water inlet (18); and the second section (28) comprises a said first branch (19e) and a said second branch (20e) arranged parallel to each other, a second boiler (31) connected hydraulically in series with the second arm (12) downstream of the first and second branches (19e,20e) and connected hydraulically in series with both the first and second branches (19e,20e), and a second three-way deviator valve (32) arranged upstream of the first and second branches (19e,20e) so as to connect selectively the first and second branches of the second section (28) to the tap water inlet (18).

8. The device (10f) as claimed in claim 4, wherein the hydraulic circuit (12e) comprises: a first and a second hydraulic circuit section (41,42) arranged hydraulically in parallel with each other downstream of the tap water inlet (18), the first section (41) connecting hydraulically the first arm (11) to the tap water inlet and the second section (42) connecting hydraulically the second arm (12) to the tap water inlet; **characterized in that**: the first section (41) comprises a said first branch (19i) and a said second branch (20i) arranged hydraulically in parallel with each other, a first boiler (43) connected hydraulically in series with the first arm (11) downstream of the first and second branches (19i,20i) and connected hydraulically in series with both the first and second branches (19i,20i), and a first on-off valve (44) arranged in series along the first branch (19i) of the first section (41); and the second section (42) comprises a said first branch (19m) and a said second branch (20m) arranged hydraulically in parallel with each other, a second boiler ( 45) connected hydraulically in series with the second arm ( 12) downstream of the first and second branches (19m,20m) and connected hydraulically in series with both the first and second branches, and a second on-off valve (46) arranged in series along the first branch (19m) of the second section (42).

9. The device (10c) as claimed in one of claims 1 to 4, wherein the hydraulic circuit (13c) comprises a first section (34) arranged immediately downstream of the tap water inlet (18) and a second section (35) arranged hydraulically in series with, and downstream of, the first section (34) and downstream of a boiler ( I 4b) arranged hydraulically in series between the first and second sections (34,35); **characterized in that** the second section (35) supplies directly the first and second branches (11,12), in parallel, by means of a bifurcation (36), while the first section (34) is provided with said first branch (19f) and second branch (20f) arranged hydraulically in parallel with each other and connected to the tap water inlet (18) by means of a three-way deviator valve (37), the second branch (20f) being provided in series with said flow choking means (21).

10. Device (10d) according to one of claims 1 to 4, wherein the hydraulic circuit (13d) comprises a first section (38) and a second section (39) arranged both immediately downstream of a boiler (14c) connected hydraulically in series with both the first and second sections (38,39) and arranged downstream of the tap water inlet (18); **characterized in that** the first section (38) supplies directly and exclusively the first arm (11), while the second section (39) supplies exclusively the second arm (12) and comprises said first branch (19h) and second branch (20h) which are connected to the boiler (14c) by means of a three-way deviator valve (40) on one side and directly in series with the second arm (12) on the opposite side.

11. Dishwashing machine (1), in particular of the professional, static or tunnel type, comprising at least one station (6) provided with an adjustable rinsing device (10) according to any one of the preceding claims.

## Patentansprüche

1. Einstellbare Spülvorrichtung (10) für eine Geschirrspülmaschine (1), insbesondere vom gewerblichen, statischen oder Tunneltyp, die mindestens einen ersten - beispielsweise oberen - Spülarm (11), mindestens einen zweiten - beispielsweise unteren - Spülarm (12), und Mittel zum Zuführen von Wasser zu den Spülarmen aufweist, die einen Hydraulikkreis (13) beinhalten, der Leitungswasser parallel zumindest dem ersten Spülarm und zumindest dem zweiten Spülarm hydraulisch zuführt, **dadurch gekennzeichnet, dass** in Kombination:
i)- der Hydraulikkreis (13) einen ersten und einen zweiten Abschnitt (23, 24; 27, 28; 38, 39; 41, 42) aufweist, wobei mindestens einer davon mit mindestens einem von dem ersten und dem zweiten Spülarm (11, 12) verbunden ist;
ii)- mindestens einer von dem ersten und dem zweiten Abschnitt
iii)- einen ersten Zweig (19) und mindestens einen zweiten Zweig (20) aufweist, die hydraulisch parallel miteinander zwischen einem Leitungswassereinlass (18) in dem Hydraulikkreis (13) und mindestens dem ersten und dem zweiten Spülarm (11, 12) angeordnet sind, wobei mindestens der zweite Zweig (20) Durchflussdrosselungsmittel (21) beinhaltet, die damit hydraulisch in Reihe angeordnet sind; und
iv)- Mittel (22) zum selektiven Umlenken des Leitungswassers in Richtung entweder des ersten Zweigs (19) oder des zweiten Zweigs (20).

2. Vorrichtung nach Anspruch 1, **dadurch gekennzeichnet, dass** der Hydraulikkreis (13) mindestens einen Kessel (14) zum Erwärmen des Leitungswassers auf eine vorbestimmte Temperatur vor dem Zuführen des Leitungswassers zu den Spülarmen (11, 12) aufweist; wobei der erste und der zweite Zweig (19, 20) und die Mittel (22) zum selektiven Umlenken des Leitungswassers in Richtung entweder des ersten Zweigs oder des zweiten Zweigs hydraulisch stromaufwärts oder stromabwärts des mindestens einen Kessels (14) angeordnet sind, so dass sie mindestens einen von dem mindestens einen ersten und zweiten Spülarm (11, 12) über den mindestens einen Kessel (14) mit dem Leitungswassereinlass (18) verbinden.

3. Vorrichtung nach Anspruch 1 oder 2, **dadurch gekennzeichnet, dass** die Mittel (22) zum selektiven Umlenken des Leitungswassers in Richtung entweder des ersten Zweigs oder des zweiten Zweigs aus einem Mehrwege-Umlenkventil (25; 26; 30; 32; 37) bestehen, das hydraulisch stromaufwärts des ersten und des zweiten Zweigs (19, 20) angeordnet ist.

4. Vorrichtung nach Anspruch 1 oder 2, **dadurch gekennzeichnet, dass** die Mittel (22) zum selektiven Umlenken des Leitungswassers in Richtung entweder des ersten Zweigs oder des zweiten Zweigs aus einem Ein-Aus-Ventil (44; 46) bestehen, das entlang des ersten Zweigs (19) hydraulisch in Reihe angeordnet ist.

5. Vorrichtung nach einem der vorhergehenden Ansprüche, die ferner einen dritten Spülarm (33), der mittels des Hydraulikkreises (13) mit dem ersten Spülarm (11) stromabwärts des ersten Arms hydraulisch in Reihe verbunden ist; und einen vierten Spülarm (34), der mittels des Hydraulikkreises (13) mit dem zweiten Spülarm (12) stromabwärts des zweiten Arms hydraulisch in Reihe verbunden ist, aufweist.

6. Vorrichtung (10) nach einem der Ansprüche 1 bis 3, wobei der Hydraulikkreis (13) hydraulisch in Folge stromabwärts des Leitungswassereinlasses (18) aufweist: einen Kessel (14) und einen ersten Kreislaufabschnitt (23) und einen zweiten Kreislaufabschnitt (24), die unmittelbar stromabwärts des Kessels (14) hydraulisch parallel zueinander angeordnet sind, wobei der erste Abschnitt (23) den ersten Arm (11) über ein erstes Dreiwege-Umlenkventil (25) hydraulisch mit dem Kessel (14) verbindet und der zweite Abschnitt (24) den zweiten Arm (12) über ein zweites Dreiwege-Umlenkventil (26) hydraulisch mit dem Kessel (14) verbindet; **dadurch gekennzeichnet, dass** der erste und der zweite Abschnitt (23, 24) jeweils den ersten Zweig (19b, 19c) und den zweiten Zweig (20b; 20c) parallel zueinander angeordnet aufweisen; wobei der erste und der zweite Zweig (19b, 20b) des ersten Abschnitts (23) auf einer Seite mit dem ersten Arm (11) und auf der gegenüberliegenden Seite mit dem ersten Dreiwegeventil (25) hydraulisch in Reihe verbunden sind; und wobei der erste und der zweite Zweig (19c, 20c) des zweiten Abschnitts (24) auf einer Seite mit dem zweiten Arm (12) und auf der gegenüberliegenden Seite mit dem zweiten Dreiwegeventil (26) hydraulisch in Reihe verbunden sind.

7. Vorrichtung (10b) nach einem der Ansprüche 1 bis 3, wobei der Hydraulikkreis (13b) aufweist: einen ersten Hydraulikkreisabschnitt (27) und einen zweiten Hydraulikkreis (28), die stromabwärts des Leitungswassereinlasses (18) hydraulisch parallel zueinander angeordnet sind, wobei der erste Abschnitt (27) den ersten Arm (11) hydraulisch mit dem Leitungswassereinlass verbindet und der zweite Abschnitt (28) den zweiten Arm (12) hydraulisch mit dem Leitungswassereinlass verbindet; **dadurch gekennzeichnet, dass** der erste Abschnitt (27) den ersten Zweig (19d) und den zweiten Zweig (20d), die hydraulisch parallel zueinander angeordnet sind, einen ersten Kessel (29), der mit dem ersten Arm (11) stromabwärts des ersten und des zweiten Zweigs (19d, 20d) hydraulisch in Reihe verbunden ist und mit sowohl dem ersten als auch dem zweiten Zweig (19d, 20d) hydraulisch in Reihe verbunden ist, und ein erstes Dreiwege-Umlenkventil (30) aufweist, das stromaufwärts des ersten und des zweiten Zweigs (19d, 20d) angeordnet ist, so dass es den ersten und den zweiten Zweig des ersten Abschnitts (27) selektiv mit dem Leitungswassereinlass (18) verbindet; und der zweite Abschnitt (28) den ersten Zweig (19e) und den zweiten Zweig (20e), die parallel zueinander angeordnet sind, einen zweiten Kessel (31), der hydraulisch in Reihe mit dem zweiten Arm (12) stromabwärts des ersten und zweiten Zweigs (19e, 20e) verbunden ist und mit sowohl dem ersten als auch dem zweiten Zweig (19e, 20e) hydraulisch verbunden ist, und ein zweites Dreiwege-Umlenkventil (32) aufweist, das stromaufwärts des ersten und des zweiten Zweigs (19e, 20e) angeordnet ist, so dass es den ersten und den zweiten Zweig des zweiten Abschnitts (28) mit dem Leitungswassereinlass (18) verbindet.

8. Vorrichtung (10f) nach Anspruch 4, wobei der Hydraulikkreis (12e) aufweist: einen ersten und einen zweiten Hydraulikkreisabschnitt (41, 42), die stromabwärts des Leitungswassereinlasses (18) hydraulisch parallel zueinander angeordnet sind, wobei der erste Abschnitt (41) den ersten Arm (11) hydraulisch mit dem Leitungswassereinlass verbindet und der zweite Abschnitt (42) den zweiten Arm (12) hydraulisch mit dem Leitungswassereinlass verbindet; **dadurch gekennzeichnet, dass** der erste Abschnitt (41) den ersten Zweig (19i) und den zweiten Zweig (20i), die hydraulisch parallel zueinander angeordnet sind, einen ersten Kessel (43), der mit dem ersten Arm (11) stromabwärts des ersten und des zweiten Zweigs (19i, 20i) hydraulisch in Reihe verbunden ist und sowohl dem ersten als auch dem zweiten Zweig (19i, 20i) hydraulisch in Reihe mit verbunden ist, und ein erstes Ein-Aus-Ventil (44) aufweist, das entlang des ersten Zweigs (19i) des ersten Abschnitts (41) in Reihe angeordnet ist, und der zweite Abschnitt (42) den ersten Zweig (19m) und den zweiten Zweig (20m), die hydraulisch parallel zueinander angeordnet sind, einen zweiten Kessel (45), der mit dem zweiten Arm (12) stromabwärts des ersten und des zweiten Zweigs (19m, 20m) hydraulisch in Reihe verbunden ist und mit sowohl dem ersten als auch dem zweiten Zweig hydraulisch in Reihe verbunden ist, und ein zweites Ein-Aus-Ventil (46) aufweist, das entlang des ersten Zweigs (19m) des zweiten Abschnitts (42) in Reihe angeordnet ist.

9. Vorrichtung (10c) nach einem der Ansprüche 1 bis 4, wobei der Hydraulikkreis (13c) einen ersten Abschnitt (34), der unmittelbar stromabwärts des Leitungswassereinlasses (18) angeordnet ist, und einen zweiten Abschnitt (35) aufweist, der stromabwärts des ersten Abschnitts (34) hydraulisch mit diesem in Reihe und stromabwärts eines Kessels (14b) angeordnet ist, der zwischen dem ersten und dem zweiten Abschnitt (34, 35) hydraulisch in Reihe angeordnet ist; **dadurch gekennzeichnet, dass** der zweite Abschnitt (35) den ersten und den zweiten Zweig (11, 12) mittels einer Gabelung (36) direkt parallel versorgt, während der erste Abschnitt (34) mit dem ersten Zweig (19f) und dem zweiten Zweig (20f) versehen ist, die hydraulisch parallel zueinander angeordnet und mit dem Leitungswassereinlass (18) mittels eines Dreiwege-Umlenkventils (37) verbunden sind, wobei der zweite Zweig (20f) mit den Durchflussdrosselungsmitteln (21) in Reihe vorgesehen ist.

10. Vorrichtung (10d) nach einem der Ansprüche 1 bis 4, wobei der Hydraulikkreis (13d) einen ersten Abschnitt (38) und einen zweiten Abschnitt (39) aufweist, die beide unmittelbar stromabwärts eines Kessels (14c) angeordnet sind, der mit sowohl dem ersten als auch dem zweiten Abschnitt (38, 39) hydraulisch in Reihe verbunden ist und stromabwärts des Leitungswassereinlasses (18) angeordnet ist; **dadurch gekennzeichnet, dass** der erste Abschnitt (38) direkt und ausschließlich den ersten Arm (11) versorgt, während der zweite Abschnitt (39) ausschließlich den zweiten Arm (12) versorgt, und den ersten Zweig (19h) und den zweiten Zweig (20h) aufweist, die mit dem Kessel (14c) mittels eines Dreiwege-Umlenkventils (40) auf einer Seite und auf der gegenüberliegenden Seite mit dem zweiten Arm (12) direkt in Reihe verbunden sind.

11. Geschirrspülmaschine (1), insbesondere vom gewerblichen, statischen oder Tunneltyp, die mindestens eine Station (6) aufweist, die mit einer einstellbaren Spülvorrichtung (10) nach einem der vorhergehenden Ansprüche versehen ist.

## Revendications

1. Dispositif de rinçage réglable (10) pour un lave-vaisselle (1) en particulier du type statique ou à tunnel, professionnel, comprenant au moins un premier - par exemple supérieur - bras de rinçage (11), au moins un deuxième - par exemple inférieur - bras de rinçage (12), et des moyens pour l'alimentation en eau aux bras de rinçage comprenant un circuit hydraulique (13) qui alimente en eau de distribution hydrauliquement en parallèle au moins au premier bras de rinçage et au moins au deuxième bras de rinçage, **caractérisé en ce que**, en combinaison :
i)- le circuit hydraulique (13) comprend une première et une deuxième section (23, 24 ; 27, 28 ; 38, 39 ; 41, 42), au moins une de celles-ci étant reliée à au moins un parmi les premier et deuxième bras de rinçage (11, 12) ;
ii)- au moins une parmi les première et deuxième sections comprenant iii)- une première branche (19) et au moins une deuxième branche (20) agencées hydrauliquement en parallèle l'une par rapport à l'autre entre une entrée d'eau de distribution (18) dans le circuit hydraulique (13) et au moins les premier et deuxième bras de rinçage (11, 12), au moins la deuxième branche (20) comprenant un moyen d'étranglement d'écoulement (21) hydrauliquement en série avec celle-ci ; et iv)- des moyens (22) pour la déviation sélective de l'eau de distribution soit vers la première branche (19) soit vers la deuxième branche (20).

2. Dispositif selon la revendication 1, **caractérisé en ce que** le circuit hydraulique (13) comprend au moins une chaudière (14) pour le chauffage de l'eau de distribution à une température prédéfinie avant l'alimentation en eau de distribution aux bras de rinçage (11, 12) ; lesdites première et deuxième branches (19, 20) et lesdits moyens (22) pour la déviation sélective de l'eau de distribution soit vers la première branche soit vers la deuxième branche étant agencés hydrauliquement en amont ou en aval de l'au moins une chaudière (14) afin de relier au moins un parmi lesdits au moins un premier et un deuxième bras de rinçage (11, 12) à l'entrée d'eau de distribution (18) via l'au moins une chaudière (14).

3. Dispositif selon la revendication 1 ou 2, **caractérisé en ce que** les moyens (22) pour la déviation sélective de l'eau de distribution soit vers la première branche, soit vers la deuxième branche sont constitués d'une vanne de déviation à plusieurs voies (25 ; 26 ; 30 ; 32 ; 37) agencée hydrauliquement en amont des première et deuxième branches (19, 20).

4. Dispositif selon la revendication 1 ou 2, **caractérisé en ce que** les moyens (22) pour la déviation sélective de l'eau de distribution soit vers la première branche, soit vers la deuxième branche sont constitués par une vanne tout ou rien (44 ; 46) agencée hydrauliquement en série le long de la première branche (19).

5. Dispositif selon l'une quelconque des revendications précédentes, comprenant en outre un troisième bras de rinçage (33) relié au moyen dudit circuit hydraulique (13) hydrauliquement en série avec le premier bras de rinçage (11) en aval du premier bras ; et un quatrième bras de rinçage (34) relié au moyen dudit circuit hydraulique (13) hydrauliquement en série avec le deuxième bras de rinçage (12) en aval du deuxième bras.

6. Dispositif (10) selon l'une quelconque des revendications 1 à 3, dans lequel le circuit hydraulique (13) comprend hydrauliquement en séquence en aval de l'entrée d'eau de distribution (18) : une chaudière (14) et une première section de circuit (23) et une deuxième section de circuit (24) agencées hydrauliquement en parallèle l'une par rapport à l'autre immédiatement en aval de la chaudière (14), la première section (23) reliant hydrauliquement le premier bras (11) à la chaudière (14) via une première vanne de déviation à trois voies (25) et la deuxième section (24) reliant hydrauliquement le deuxième bras (12) à la chaudière (14) via une deuxième vanne de déviation à trois voies (26) ; **caractérisé en ce que** les première et deuxième sections (23, 24) comprennent chacune une dite première branche (19b, 19c) et une dite deuxième branche (20b ; 20c) agencées en parallèlement l'une par rapport à l'autre ; les première et deuxième branches (19b, 20b) de la première section (23) étant reliées hydrauliquement en série, sur un côté, au premier bras (11) et, du côté opposé, à la première vanne à trois voies (25) ; et les première et deuxième branches (19c, 20c) de la deuxième section (24) étant reliées hydrauliquement en série, sur un côté, au deuxième bras (12) et, du côté opposé, à la deuxième vanne à trois voies (26).

7. Dispositif (10b) selon l'une quelconque des revendications 1 à 3, dans lequel le circuit hydraulique (13b) comprend : une première section de circuit hydraulique (27) et un deuxième circuit hydraulique (28) agencés hydrauliquement en parallèle l'un par rapport à l'autre en aval de l'entrée d'eau de distribution (18), la première section (27) reliant hydrauliquement le premier bras (11) à l'entrée d'eau de distribution et la deuxième section (28) reliant hydrauliquement le deuxième bras (12) à l'entrée d'eau de distribution ; **caractérisé en ce que** : la première section (27) comprend une dite première branche (19d) et une dite deuxième branche (20d) agencées hydrauliquement en parallèle l'une par rapport à l'autre, une première chaudière (29) reliée hydrauliquement en série avec le premier bras (11) en aval des première et deuxième branches (19d, 20d) et reliées hydrauliquement en série avec à la fois les première et deuxième branches (19d, 20d), et une première vanne de déviation à trois voies (30) agencée en amont des première et deuxième branches (19d, 20d) afin de relier sélectivement les première et deuxième branches de la première section (27) à l'entrée d'eau de distribution (18) ; et la deuxième section (28) comprend une dite première branche (19e) et une dite deuxième branche (20e) agencées parallèlement l'une à l'autre, une deuxième chaudière (31) reliée hydrauliquement en série avec le deuxième bras (12) en aval des première et deuxième branches (19e, 20e) et reliée hydrauliquement en série avec à la fois les première et deuxième branches (19e, 20e), et une deuxième vanne de déviation à trois voies (32) disposée en amont des première et deuxième branches (19e, 20e) afin de relier sélectivement les première et deuxième branches de la deuxième section (28) à l'entrée d'eau de distribution (18).

8. Dispositif (10f) selon la revendication 4, dans lequel le circuit hydraulique (12e) comprend : une première et une deuxième section de circuit hydraulique (41, 42) agencées hydrauliquement en parallèle l'une par rapport à l'autre en aval de l'arrivée d'eau de distribution (18), la première section (41) reliant hydrauliquement le premier bras (11) à l'entrée d'eau de distribution et la deuxième section (42) reliant hydrauliquement le deuxième bras (12) à l'entrée d'eau de distribution ; **caractérisé en ce que** : la première section (41) comprend une dite première branche (19i) et une dite deuxième branche (20i) agencées hydrauliquement en parallèle l'une par rapport à l'autre, une première chaudière (43) reliée hydrauliquement en série avec le premier bras (11) en aval des première et deuxième branches (19i, 20i) et reliée hydrauliquement en série avec à la fois les première et deuxième branches (19i, 20i), et une première vanne tout ou rien (44) agencée en série le long de la première branche (19i) de la première section (41) ; et la deuxième section (42) comprend une dite première branche (19m) et une dite deuxième branche (20m) agencées hydrauliquement en parallèle l'une par rapport à l'autre, une deuxième chaudière (45) reliée hydrauliquement en série avec le deuxième bras (12) en aval des première et deuxième branches (19m, 20m) et reliée hydrauliquement en série avec à la fois les première et deuxième branches, et une deuxième vanne tout ou rien (46) agencée en série le long de la première branche (19m) de la deuxième section (42).

9. Dispositif (10c) selon l'une des revendications 1 à 4, dans lequel le circuit hydraulique (13c) comprend une première section (34) agencée immédiatement en aval de l'entrée d'eau de distribution (18) et une deuxième section (35) agencée hydrauliquement en série avec, et en aval de, la première section (34) et en aval d'une chaudière (I 4b) agencée hydrauliquement en série entre les première et deuxième sections (34, 35) ; **caractérisé en ce que** la deuxième section (35) alimente directement les première et deuxième branches (11, 12), en parallèle, au moyen d'une bifurcation (36), tandis que la première section (34) est fournie avec ladite première branche (19f) et ladite deuxième branche (20f) agencées hydrauliquement en parallèle l'une par rapport à l'autre et reliées à l'entrée d'eau de distribution (18) au moyen d'une vanne de déviation à trois voies (37), la deuxième branche (20f) étant fournie en série avec lesdits moyens d'étranglement d'écoulement (21).

10. Dispositif (10d) selon l'une des revendications 1 à 4 dans lequel le circuit hydraulique (13d) comprend une première section (38) et une deuxième section (39) agencées toutes les deux immédiatement en aval d'une chaudière (14c) reliée hydrauliquement en série avec à la fois les première et deuxième sections (38, 39) et agencée en aval de l'entrée d'eau de distribution (18) ; **caractérisé en ce que** la première section (38) alimente directement et exclusivement le premier bras (11), tandis que la deuxième section (39) alimente exclusivement le deuxième bras (12) et comprend lesdites première branche (19h) et deuxième branche (20h) qui sont reliées à la chaudière (14c) au moyen d'une vanne de déviation à trois voies (40) sur un côté et directement en série avec le deuxième bras (12) sur le côté opposé.

11. Lave-vaisselle (1), en particulier du type statique ou tunnel, professionnel, comprenant au moins un poste (6) fourni avec un dispositif de rinçage réglable (10) selon l'une quelconque des revendications précédentes.
